# EUROPÄISCHE PATENTSCHRIFT

(11) **EP 1 082 233 B1**
(45) Veröffentlichungstag und Bekanntmachung des Hinweises auf die Patenterteilung: **10.04.2002**
(21) Anmeldenummer: 99926508.5
(22) Anmeldetag: 02.06.1999
(51) Int. Cl.: B60N 2/44

(54) **Wölbungsverstellbare Stütze, insbesondere Lordosenstütze, für Sitze und Liegen aller Art**
Support with adjustable arch, especially a lumbar support, for any type of seat or bed
Dossier à courbure adaptable, notamment élément de soutien lordotique, pour sièges et chaises longues de tout type

(30) Priorität: 05.06.1998 DE 19825225
(43) Veröffentlichungstag der Anmeldung: 14.03.2001
(73) Patentinhaber: Schukra-Gerätebau AG, 4060 Linz, Leonding (AT)
(72) Erfinder: Klingler, Knud, 4030 Linz (AT)
(74) Vertreter: Banzer, Hans-Jörg, Dipl.-Ing.
(86) Internationale Anmeldenummer: EP9903825
(87) Internationale Veröffentlichungsnummer: WO9964266

(56) Entgegenhaltungen:
- DE-C- 4 320 105
- US-A- 5 651 583

## Beschreibung

Die Erfindung betrifft eine wölbungsverstellbare Stütze, insbesondere Lordosenstütze, für Sitze, insbesondere Kraftfahrzeugsitze und Stuhllehnen, sowie Liegen aller Art, in deren Gerüst ein Wölbelement und eine Verstelleinrichtung zur Ein- und Verstellung der Wölbung des Wölbelements enthalten ist.

Wölbelemente sind z. B. aus der DE-OS 25 41 559, der DE 42 32 679 C1 und der DE 44 44 803 C2 bekannt. Praktisch allen bekannten Wölbelementen ist gemeinsam, daß, je stärker das Wölbelement gewölbt wird, desto härter wird es und die Fläche, mit der es am zu unterstützenden Körper anliegt, wird immer geringer bis eine linienförmige Berührungslinie erreicht ist, was, mindestens nach längerer Zeit, dem Benutzer Unannehmlichkeiten bis hin zu Schmerzen verursacht. Diese Probleme summieren sich, wenn zudem das Wölbelement in falscher Höhe eingestellt ist

Aus der DE-OS 25 41 559 ist eine Rückenstütze bekannt, die an zwei relativ zueinander und gemeinsam verschiebbaren Stützen, in Form von Blattfedern, eine aus- und einfahrbare feste Stützplatte aufweist. Hier ist die Stützfläche unabhängig vom aus- oder eingefahrenen Zustand immer gleich groß und im Prinzip auch immer gleich steif.

Aus der den Oberbegriff des Anspruchs 1 bildenden US-A- 5 651 583 und der entsprechenden DE 42 32 679 C1 aber auch aus der DE 43 20 105 C1 sind Rückenlehnen mit einem verstellbaren Wölbelement bekannt, die eine mit dem Wölbelement verbundene zusätzliche Beckenstütze aufweist. Hierdurch wird auch bei stärkerer Wölbung eine verbesserte flächige Abstützung, insbesondere in Richtung des Beckens erzielt, insbesondere dann, wenn gemäß einem Ausführungsbeispiel eine biegeelastische Platte statt einer steifen, die dann aber einseitig abgefedert ist, Platte vorgesehen ist. Diese Ausführung ist jedoch herstellungs- und, durch die vielen notwendigen Teile, auch kostenaufwendig.

Aus der DE 44 44 803 C3 ist ein einstückiges und damit einfach herzustellendes elastisches Wölbelement aus Kunststoff bekannt, in das Teile der Verstelleinrichtung integriert sind, wobei bei starker Wölbung die oben genannten Probleme auftreten.

Aufgabe der Erfindung ist es, eine wölbungsverstellbare Stütze gemäß dem Oberbegriff des Anspruchs 1 dahingehend zu gestalten, daß auch bei stärkster Wölbung eine federnde und flächige Anlage am Benutzer gewährleistet ist, wobei diese Stütze einfach, schnell und preiswert herstellbar als auch zu montieren ist

Diese Aufgabe wird durch eine wölbungsverstellbare Stütze mit den kennzeichnenden Merkmalen des Anspruchs 1 gelöst. Durch diese Lösung wird ein Wölbelement aus einem wölbbaren Elementteil und einer Platte gewonnen, wobei die damit verbundene Platte durch ihre geringflächige Verbindung wenig oder gar nicht gewölbt wird und unabhängig vom Grad der Wölbung immer federnd und damit flächig wirkt.

Die Unteransprüche enthalten vorteilhafte Weiterbildungen des Gegenstandes des Anspruchs 1, deren jeweilige Vorteile bei der Beschreibung von Ausführungsbeispielen der Erfindung näher erläutert werden.

Nachstehend wird die Erfindung anhand von Ausführungsbeispielen unter Bezug auf Zeichnungen näher erläutert. Es zeigt:
- Fig. 1: eine in der Lehne eines Sitzes auf- und abbeweglich angeordnete wölbungsverstellbare Stütze mit einer Platte in Draufsicht;
- Fig. 2: das gleiche wie in Fig. 1 in Seitenansicht;
- Fig. 3: ein Ausführungsbeispiel einer Stütze mit zwei nebeneinander angeordneten Platten;
- Fig. 4: verschiedene Ausführungsformen von Platten;
- Fig. 5: ein Ausführungsbeispiel mit zwei Platten und zentraler Führung für den Seilzug einer Bowdenzuganordnung zur Verstellung der Wölbung in Draufsicht;
- Fig. 6: das gleiche wie in Fig. 5 in Seitenansicht;
- Fig. 7: eine mit einer Auflage versehene Stütze a) in der Ausgangsstellung und b) bei starker Wölbung;
- Fig. 8: eine Aufnahme als ausgestanzter Steg für das Mantelende eines Bowdenzugs als Stanzteil und nach Umformung mit dem befestigten Mantel in Seitenansicht;
- Fig. 9: eine Ausführungsvariante einer Aufnahme a) als ausgestanzter Steg und b) nach Umformung mit dem befestigten Mantel in Seitenansicht und c) in Draufsicht;

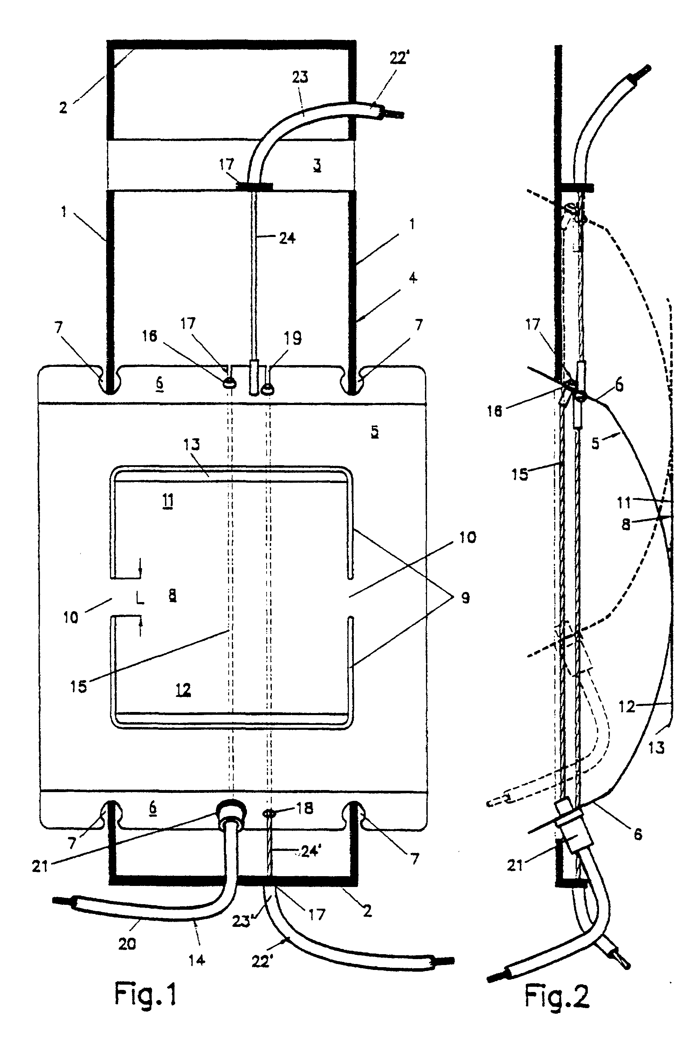

In Fig. 1 und 2 ist eine auf Längsstreben 1 in Form von Rundstäben verstellbar angeordnete wölbungsverstellbare Stütze dargestellt. Die Längsstreben 1 sind am oberen und unteren Ende mit Querstreben 2 und dazwischen mit einer Zwischenstrebe 3 verbunden. Das aus den Streben 1, 2, 3 gebildete Gerüst 4 ist Bestandteil einer Lehne eines nicht dargestellten beliebigen Sitzes. Vorzugsweise ist das Gerüst 4 mit der Lehne mittels Befestigungselementen aus Kunststoff verbunden. Die Stütze weist ein wölbbares Elementteil 5 auf, der entlang der Längsstreben 1 auf- und abbeweglich angeordnet ist. Er ist flächig gestaltet und weist am oberen und unteren Ende abgewinkelte Rander 6 auf, in denen geschlitzte Führungslöcher 7 ausgeführt sind, die zur beweglichen werkzeugfreien Anordnung des wölbbaren Elementteils 5 am Gerüst 4 vorgesehen sind.

Zentral im wölbbaren Elementteil 5 ist eine Platte 8 angeordnet, die aus dem wölbbaren Elementteil 5 durch Ausstanzen von zwei U-förmigen Schlitzen 9 unter Belassung von zwei symmetrisch angeordneten Verbindungsstegen 10 zwischen ihnen ausgestanzt ist. Die Verbindungsstege 10 bilden für die Platte 8 eine Art Drehachse, die parallel zu den Rändern 6 des wölbbaren Elementteils 5 ausgerichtet ist. Im Ausführungsbeispiel gemäß Fig. 1 sind die Verbindungsstege 10 bezüglich der Platte 8 symmetrisch angeordnet, d. h. die Platte 8 wird in zwei gleiche Teilplatten 11, 12 - eine obere 11 und eine untere 12 - gegliedert. Jede Teilplatte 11, 12 weist am jeweils freien Ende einen nach hinten abgekanteten oder abgebogenen Rand 13 auf.

Das wölbbare Elementteil 5 ist mit Teilen einer Verstelleinrichtung zur Ein- und Verstellung seiner Wölbung versehen, die im Ausführungsbeispiel eine Bowdenzuganordnung 14 einschließt Die Bowdenzuganordnung 14 weist einen Seilzug 15 auf, der mit seinem einen einen Nippel 16 aufweisenden Ende in einer Aufnahme 17 festgelegt ist, die in einem der Ränder 6 des wölbbaren Elementteils 5 ausgeführt ist. Im Ausführungsbeispiel ist die Aufnahme 17 im oberen Rand 6 in Form einer Aussparung 18 zur Halterung des Nippels 16 und mit einem Schlitz 19 zur Einführung des Seilzuges 15 ausgeführt. Am entgegengesetzten unteren Rand 6 ist eine Aufnahme 17 zur Halterung des einen Endes des den Seilzug 15 umgebenden Mantels 20 der Bowdenzuganordnung 14 in Form einer Hülse 21 angeordnet.

Zur Verstellung des wölbbaren Elementteils 5 auf einer Wegstrecke, hier zur Höhenverstellung zwischen der unteren Querstrebe 2 und Zwischenstrebe 3, ist im Ausführungsbeispiel eine Vorrichtung mit zwei Bowdenzügen 22, 22' vorgesehen, deren Mäntel 23, 23' in Aufnahmen 17 an der Zwischenstrebe 3 bzw. an der unteren Querstrebe 2 angeordnet sind. Die jeweiligen Seilzüge 24 bzw. 24' sind im wölbbaren Elementteil 5 befestigt. Im Ausführungsbeispiel sind ihre Enden in den oberen Rand 6 des wölbbaren Elementteils 5 eingehängt. Durch diese benachbarte Anordnung der Seilenden wird bei einer Höhenverstellung auf die jeweils eingestellte Wölbung keinerlei Einfluß genommen. Dies wäre dann gegeben, wenn eines der Seilzugenden am oberen und das andere am unteren Rand 6 befestigt wäre: Die Höhenverstellung erfolgt hier dadurch, daß entweder eine Kraft auf den oberen oder unteren Seilzug aufgebracht wird, wobei der jeweils andere gleichzeitig im gleichen Maße entspannt wird. Es sind auch beliebig andere Verstellvorrichtungen, z. B. ein Zahnstangengetriebe oder über einen einzigen Bowdenzug mit ihm entgegenwirkenden Federn oder andere beliebige Verstellmechanismen einsetzbar.

In Fig. 2 ist ein stärker gewölbtes Elementteil 5 mit seinen abgewinkelten Rändern 6 in der Nähe einer unteren Endstellung mit ausgezogenen Linien und in gestrichelten Linien in einer oberen Endstellung gezeigt. Da die Platte 8 lediglich entlang der Länge L der Verbindungsstege 10 mit dem wölbbaren Elementteil 5 verbunden ist, unterliegt sie fast keiner Wölbung, so daß sie praktisch senkrecht (s. Fig. 2) vorsteht, wobei hier ihre obere als auch untere Teilplatte 11, 12 federnd nachgiebig wirken.

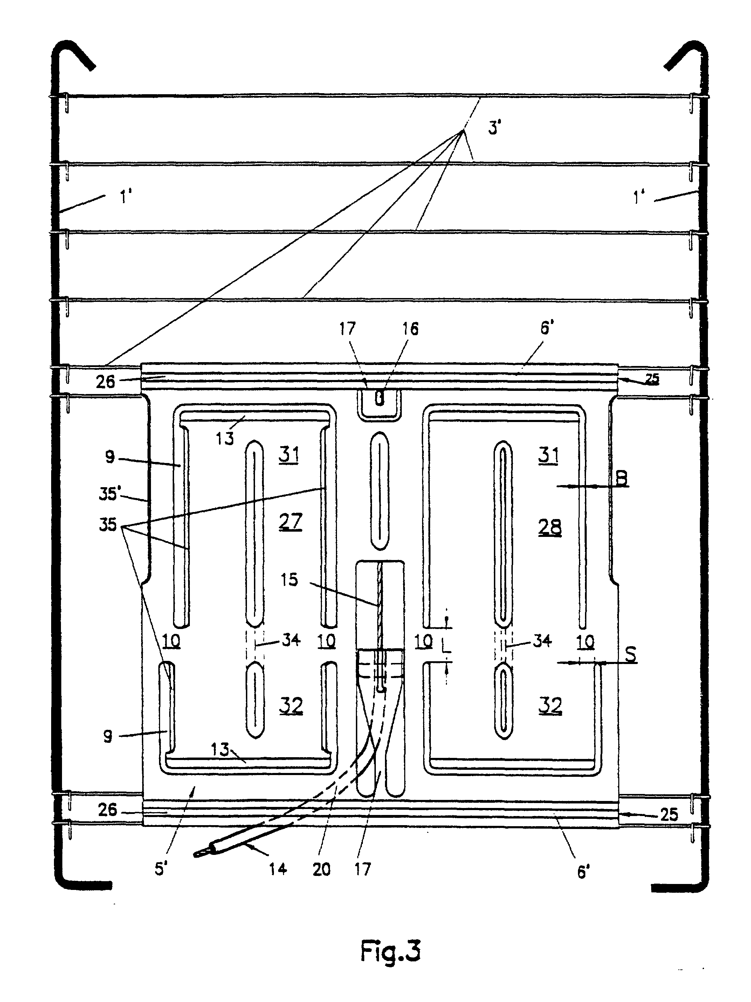

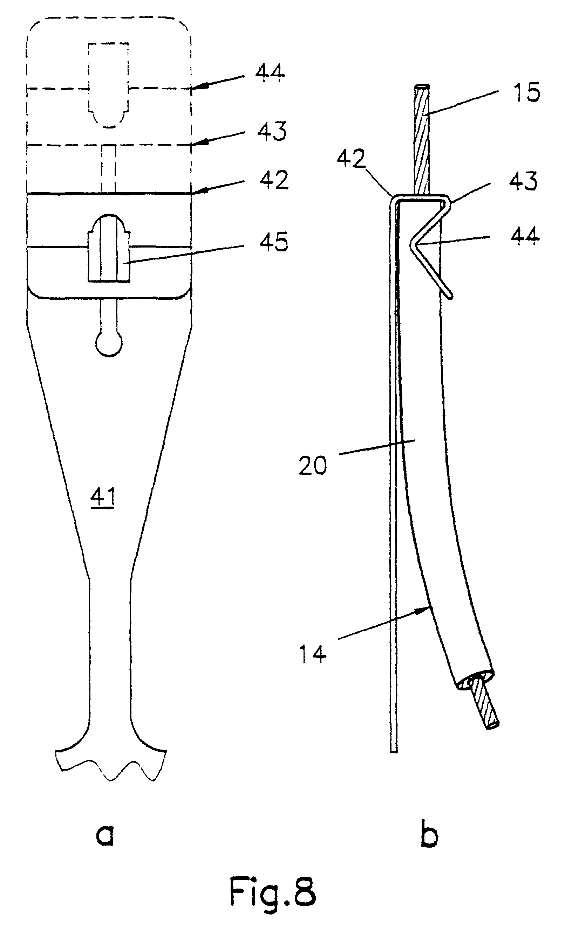

Das in Fig. 3 dargestellte Ausführungsbeispiel einer wölbungsverstellbaren Stütze weist zwei Längsstreben 1' auf, die vorzugsweise unter Verwendung von Befestigungselementen aus Kunststoff, auf eine bekannte Art und Weise in der Lehne eines Sitzes befestigt sind (nicht dargestellt). Zwischen den Längsstreben 1 sind parallele Zwischenstreben 3' aus Draht gezogen. Das wölbbare Elementteil 5' weist im oberen und unteren Teil hakenförmige Abbiegungen 25 oder Umbiegungen oder Abkantungen auf, die nach hinten gerichtet sind und zur Aufnahme jeweils einer Zwischenstrebe 3', d. h. zur Befestigung des wölbbaren Elementteils 5' am durch die Längsstreben 1 und Zwischenstreben 3' gebildeten Gerüst 4' dienen, wozu die Zwischenstreben 3' hinter die Abbiegungen 25 eingeführt werden. Bei einer Verstärkung der Wölbung des Elementteils 5' erfolgt dadurch auch eine geringe Spannung der Querstreben 3', in die das wölbbare Elementteil 5' eingehängt ist. Zur Querversteifung der Ränder 6, 6' können noch durchgehende Quersicken 26 ausgeführt sein. Im wölbbaren Elementteil 5' sind zwei symmetrisch zueinander angeordnete Platten 27, 28 so zueinander angeordnet, daß ein zentraler Zwischenraum 29 verbleibt. Im Zwischenraum 29 sind im Bereich des oberen und unteren Randes 6, 6'je eine Aufnahme 17 ausgeführt, die zur Befestigung des einen Endes des Seilzuges 15 bzw. des einen Endes des Mantels 20 einer Bowdenzuganordnung 14 zur Wölbungsverstellung des wölbbaren Elementteils 5' dienen. Die obere Aufnahme 17 ist in Form einer Öse ausgeführt, die zum Durchführen und zur Halterung des Nippels 16 des Seilzuges 15 dient. Die Aufnahme 17 zur Halterung des Endes des Mantels 20 der Bowdenzuganordnung 14 ist im Detail in Fig. 8 näher dargestellt und wird weiter unten beschrieben.

Die Platten 27, 28 sind bei diesem Ausführungsbeispiel gemäß Fig. 3 asymmetrisch gestaltet, einmal dadurch, daß ihre oberen Teilplatten 31 gegenüber den unteren Teilplatten 32 länger sind und zum anderen dadurch, daß die unteren Teilplatten 32 gegenüber den oberen Teilplatten 31 auch eine größere Breite besitzt. Die Platten 27, 28 weisen oben und unten nach hinten abgekantete oder abgebogene Ränder 13 auf. Die dargestellten Platten 27, 28 weisen Verstärkungen und/oder Schwächungen zur Erhöhung der Biegsamkeit in beliebiger gewünschter Anordnung auf, die in Form von Sicken oder Rippen oder Schlitzen mit zur Erhöhung der Biegesteifigkeit oder ohne abgewinkelte Ränder ausgeführt sein können. Im Ausführungsbeispiel sind beispielhafte Verstärkungen bzw. Schwächungen im wölbbaren Elementteil 5' und in den Platten 27, 28 linear ausgeführt, wobei auch andere Formen, z. B. keilförmige möglich sind. Hierdurch können die elastischen Biegeeigenschaften sowohl des wölbbaren Elementteils 5' als auch der Platten 27, 28 beliebig gestaltet werden.

Die Platten 27, 28 sind durch Schlitze 9 unter Belassung von Verbindungsstegen 10 entsprechend dem in Fig. 1 und 2 beschriebenen Ausführungsbeispiel vom wölbbaren Elementteil 5' abgetrennt bzw. mit ihm entlang einer linearen Achse verbunden. Die Verstärkungen bzw. Schwächungen in den Platten 27, 28 können in der Achse der Verbindungsstege 10 durchgehend ausgeführt oder auch unterbrochen sein, so daß dann flächige oder geformte Zwischenstege 34 verbleiben. Es besteht auch die Möglichkeit, die Biegesteifigkeit der Platten 27, 28 durch Versteifung ihrer Längsränder 35 benachbart zu den sie trennenden Entsprechende Möglichkeiten gibt es auch für das wölbbare Elementteil 5', wo entlang der äußeren Längsränder 35' Umbiegungen oder Bördelungen und im Zentralteil 29 Rippen oder Sicken ausgeführt sind. Es ist offensichtlich, daß durch die Art und jeweilige örtliche Anordnung der Verstärkungen oder Schwächungen die Wölbungseigenschaften des wölbbaren Elementteils 5', als auch die federnden Eigenschaften der oberen und unteren Teilplatten 31, 32 in beliebiger Weise beeinflußt werden können. Dies gilt in gleicher Weise auch für die jeweilige Größe der oberen und unteren Teilplatten 31, 32 als auch für die Breite B der Schlitze 9, als auch hinsichtlich der Länge L und Stärke S der Verbindungsstege 10 und 34.

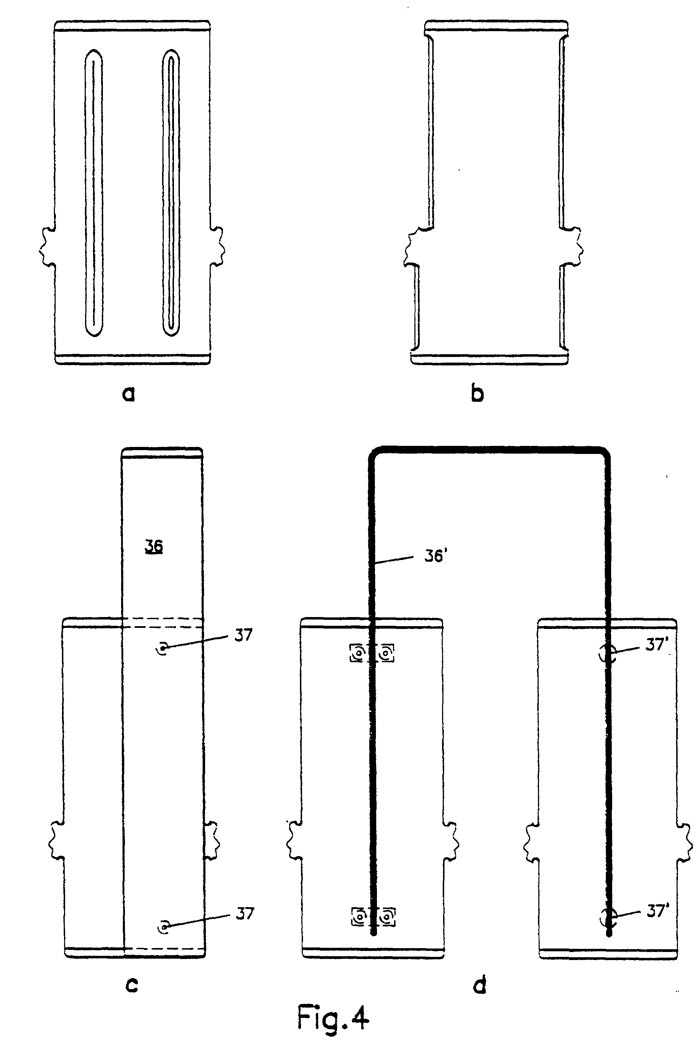

Fig. 4 zeigt eine kleine Auswahl an möglichen Formen und Ausführungen von Platten 8, 27, 28. In Fig. 4a ist eine Ausführungsform einer Platte wiedergegeben, die eine Sicke und eine Rippe mit einer schlitzartigen Öffnung aufweist. Fig. 4b zeigt eine mit Ausnahme der Abbiegungen 13 glatte Platte. In Fig. 4c ist eine Platte mit einer Verlängerung 36 dargestellt, die beispielsweise durch Nietverbindungen 37 oder Klebverbindungen fest mit der jeweiligen Platte verbunden sein kann. Bei den in Fig. 4d dargestellten Ausführungsbeispiel sind zwei Platten durch einen Bügel 36' sowohl verlängert als auch miteinander verbunden. Jede Verlängerung kann aus einem drahtförmigen Material gebogen sein und in den Platten ausgeführten Halterungen 37' z. B. in Form von z. B. ausgestanzten Einstecklöchem oder auch mittels separater Halter eingesteckt bzw. befestigt sein.

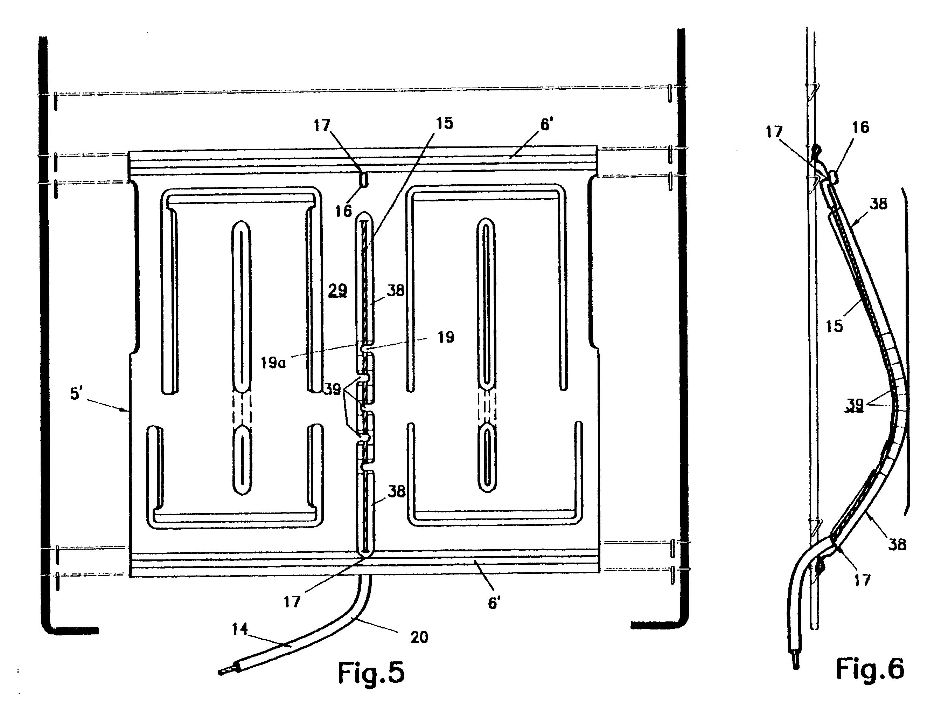

Das in Fig. 5 und Fig. 6 dargestellte Ausführungsbeispiel ähnelt dem anhand von Fig. 3 beschriebenen Ausführungsbeispiel, wobei der zentrale Zwischenraum 29 anders gestattet ist. Zentral im Zwischenraum 29 ist eine Rinne 38 vorgesehen, die zur Aufnahme und Führung des Seilzugs 15 einer Bowdenzuganordnung 14 zur Verstellung der Wölbung der Wölbplatte 5' dient, dessen am Ende des Seilzugs 15 befestigter Nippel 16 in eine Aufnahme 17 am oberen Rand 6 des wölbben Elementteils 5' eingehängt ist. Die Rinne 38 ist, insbesondere im Bereich des Wölbungsscheitels,nicht durchgehend ausgeführt und offenliegend gestaltet, insbesondere um die Biegsamkeit der Wölbung in diesem Bereich nicht zu behindern. In diesem zentralen Bereich sind in Verlängerung der durchgehenden Teile der Rinne 38 Vorsprünge 39, vorzugsweise alternierend von beiden Seiten, vorgesehen, die derart abgebogen werden können, daß sie als untere oder obere Führung für den Seilzug 15 dienen können. Am unteren Rand 6' ist am Ende der Rinne 38 eine Aufnahme 17 zur Aufnahme des Endes des Mantels der Bowdenzuganordnung 14 vorgesehen. Sie kann als durchgehende Bohrung am Ende der Rinne 38 ausgeführt sein, die den Durchgang des Nippels 16 und des Seilzugs 15 gestattet, aber den Mantel 20 vor einem Durchrutschen zurückhält. Entsprechend ist am oberen Ende der Rinne 38 ein Durchgang für den Nippel 16 und den Seilzug 15 ausgeführt.

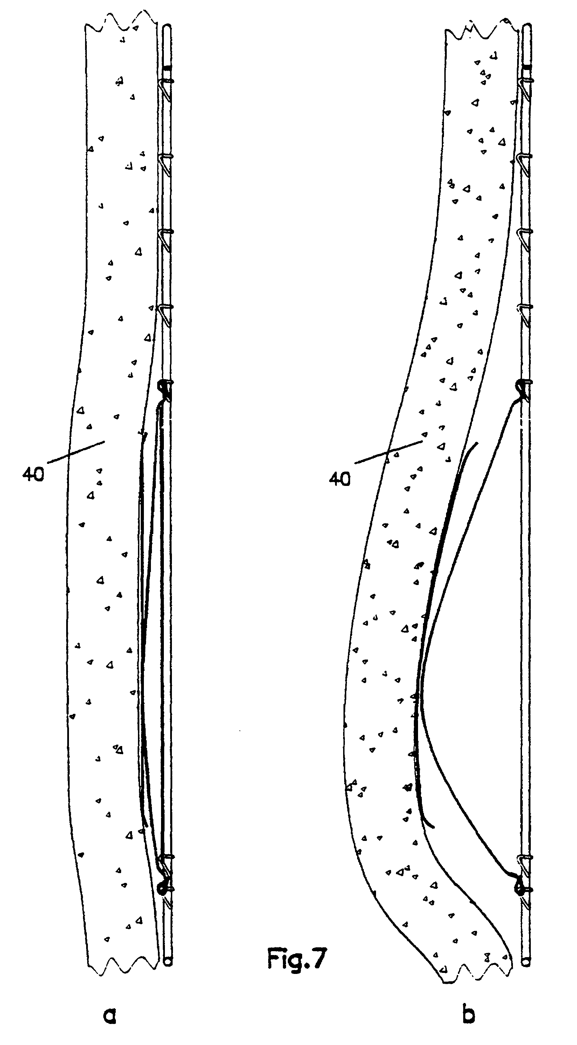

In Fig. 7 ist in schematischer Darstellung die Funktionsweise der beschriebenen Stützen wiedergegeben, wobei die Stütze in einer Ausgangsposition ohne Wölbung in Fig. 7a und bei maximaler Wölbung in Fig. 7b dargestellt ist, wobei die Stütze mit einem Bezug 40, der insbesondere ein Polster sein kann, angeordnet ist. Aus Fig. 7a ist die breitflächige Anlage des Bezuges 40 an der gesamten Stütze in der Ausgangslage erkennbar. Aber auch bei größter Wölbung ergibt sich durch die Platte/Platten eine breitflächige und federnd nachgiebige Unterstützung des Bezugs 40, wodurch ein deutlich verbesserter Sitzkomfort erreicht wird, als wenn, wie beim geschilderten Stand der Technik, lediglich die steife unnachgiebige Wölbung noch dazu nur linear wirksam würde.

Fig. 8 zeigt die beim Ausführungsbeispiel gemäß Fig. 3 bereits erwähnte Aufnahme 17 für den Mantel 20 einer Bowdenzuganordnung 14. Die dargestellte Lösung in Form eines am unteren Ende mit dem wölbbaren Elementteil 5' verbundenen Steges 41, dessen freies Ende an einer ersten Knick- oder Biegelinie 42 etwa rechtwinkelig abgebogen, an einer zweiten Linie 43 um einen Winkel über 90° umgebogen und an einer dritten Linie 44 um etwa 90° derart abgewinkelt wurde, daß eine Art federnde Klammer entsteht (s. Fig. 8b). Die Klammer weist einerseits im Bereich zwischen den Linien 42 und 43 einen Durchgang für den Seilzug 15, gegebenenfalls auch für den an seinem Ende angeordneten Nippel (nicht dargestellt) sowie eine weitere Öffnung 45 auf, die so gestaltet ist, daß bei eingeführten am Steg 41 anliegendem Mantel 20 dieser seitlich und auch von oben gehalten wird (s. Fig. 8b).

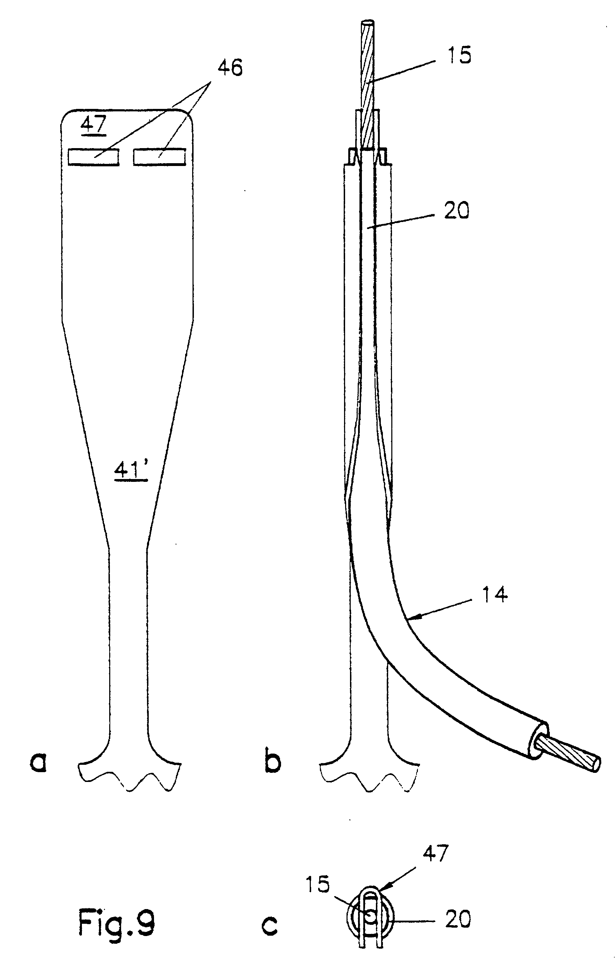

In Fig. 9 ist eine Ausführungsvariante eines Stegs 41' zur Aufnahme des Endes eines Mantels 20 einer Bowdenzuganordnung 14 dargestellt Hierbei weist der Steg 41' an seinem freien Ende zwei in einer Ebene liegende Schlitze 46 auf. Zur Verankerung des Mantels 20 wird dieser in Längsrichtung auf dem Steg 41' derart angeordnet, daß das Ende des Mantels 20 im Bereich der Schlitze 46 liegt, wobei der Steg 41' um den Mantel 20 gebogen wird, so daß er ihn zu mehr als 180° umschließt, d. h. einklemmt. Dann wird die oberhalb der Schlitze 46 verbleibende Kante 47 des Steges 41', wie in Fig. 9c gezeigt, zu einem U zusammengedrückt, so daß die U-Kanten das Mantelende überdecken und für dessen feste Positionierung Gewähr leisten, jedoch die freie Beweglichkeit des Seilzugs 15 nicht behindern.

Die dargestellten Ausführungsbeispiele haben den besonderen Vorteil, daß sie sich aus einem plattenförmigen biegeelastischen Material in einem Arbeitsschritt ausstanzen lassen. Besonders vorteilhaft, insbesondere wenn weitere Ausstanzungen und Verformungen in Form von Rippen, Abbiegungen, Sicken u. dgl. vorgesehen sind, ist die Verwendung eines Blechmaterials, insbesondere eines Stahlblechs, da derartige weitere Ausstanzungen oder Verformungen, z. B. für die Aufnahmen 17 mit in den Ausstanzvorgang integriert werden können, so daß auch nur ein einziger Arbeitsschritt notwendig ist. Es besteht aber auch die Möglichkeit derartige Stützen einstückig aus Kunststoff z. B. in einem Verpreßverfahren mit Verdickungen und/oder Verdünnungen herzustellen oder aus einem plattenförmigen Kunststoffmaterial auszustanzen, wobei eventuell weitere erforderliche Verstärkungen oder Verdünnungen in einem zweiten Bearbeitungsschritt ausgeführt werden können. Alle Verfahren lassen sich automatisieren und damit kostengünstig durchführen. Bei der Verwendung von plattenförmigen Material bzw. von Blechen kann die Stärke des Materials entsprechend den gewünschten Eigenschaften gewählt werden, so daß gegebenenfalls vollständig auf Verstärkungen verzichtet werden kann. Weitere Beeinflussungsmöglichkeiten für die Charakteristik der Stützen, insbesondere auch der federnden Platten, sind weiter oben angeführt.

## Patentansprüche

1. Wölbungsverstellbare Stütze, insbesondere Lordosenstütze, für Sitze und Liegen aller Art, in deren Gerüst ein elastisches Wölbelement und eine Verstelleinrichtung zur Ein- und Verstellung der Wölbung des Wölbelements enthalten ist,
**dadurch gekennzeichnet, dass**
das Wölbelement aus einem im wesentlichen flächigen wölbbaren Elementteil (5; 5') und aus mindestens einer damit geringflächig fest verbundenen Platte (8; 27, 28) mit zwei freien federnden Enden besteht und aus einem plattenförmigen biegeelastischen Material in einem Stück ausgestanzt ist und Befestigungselemente (7; 25; 25') zu seiner Befestigung an Teilen des Gerüsts des Sitzes oder der Liege aufweist, wobei die Befestigungselemente eine relative Bewegung der befestigten, sich gegenüberliegenden Ränder (6, 6') des Elementteils (5, 5') zu- und voneinander gewährleisten.

2. Stütze nach Anspruch 1, **dadurch gekennzeichnet, dass** das wölbbare Elementteil (5, 5') Befestigungselemente (7; 25; 25') zu seiner Befestigung am Gerüst des Sitzes oder der Liege aufweist, wobei die Befestigungselemente eine relative Bewegung der befestigten, sich gegenüberliegenden Ränder (6, 6') des wölbbaren Elementteils (5, 5') zuund voneinander gewährleisten.

3. Stütze nach Anspruch 1 oder 2, **dadurch gekennzeichnet, dass** das wölbbare Elementteil (5; 5') Aufnahmen (17) zur Anordnung des einen Endes eines Seilzugs (15; 24, 24') und des einen Endes des Mantels (20; 23, 23') einer Bowdenzuganordnung (14) aufweist, die Teil der Verstelleinrichtung für die Wölbung des Elementteils (5; 5') ist.

4. Stütze nach einem der Ansprüche 1 bis 3, **dadurch gekennzeichnet, dass** sie zwei symmetrisch zueinander und nebeneinander angeordnete Platten (27, 28) aufweist.

5. Stütze nach einem der Ansprüche 1 bis 4, **dadurch gekennzeichnet, dass** jede Platte (8; 27, 28) asymmetrisch ausgeführt ist.

6. Stütze nach einem der Ansprüche 1 bis 5, **dadurch gekennzeichnet, dass** jede Platte (8; 27, 28) asymmetrisch mit dem wölbbaren Elementteil (5; 5'; 5") verbunden ist.

7. Stütze nach einem der Ansprüche 1 bis 6, **dadurch gekennzeichnet, dass** das wölbbare Elementteil (5; 5') und/oder jede Platte (8; 27, 28) Versteifungen und/oder Verstärkungen und/oder Aussparungen aufweist.

8. Stütze nach Anspruch 7, **dadurch gekennzeichnet, dass** als Versteifungen und/oder als Verstärkungen Rippen und /oder Sicken und/oder Umbördelungen und/oder Randab- oder -umbiegungen ausgeführt sind.

9. Stütze nach einem der Ansprüche 1 bis 8, **dadurch gekennzeichnet, dass** das Material ein Blech ist.

10. Stütze nach einem der Ansprüche 1 bis 9, **dadurch gekennzeichnet, dass** jede Platte (8; 27, 28) mit dem wölbbaren Elementteil (5, 5') durch Verbindungsstege (10) unterschiedlicher Stärke (S) und/oder Länge (L) verbunden ist

11. Stütze nach einem der Ansprüche 9 bis 10, **dadurch gekennzeichnet, dass** die Aufnahmen (17) als mit dem wölbbaren Elementteil (5, 5') an einer Stelle verbundene Stege (41; 41') ausgestanzt sind.

12. Stütze nach einem der Ansprüche 3 bis 11, **dadurch gekennzeichnet, dass** mindestens teilweise der Seilzug (15) der Verstelleinrichtung am wölbbaren Elementteil (5') in Führungen geführt ist.

13. Stütze nach einem der Ansprüche 1 bis 12, **dadurch gekennzeichnet, dass** jede Platte mit einer Verlängerung (36; 36') verbunden ist.

14. Stütze nach einem der Ansprüche 1 bis 13, **dadurch gekennzeichnet, dass** jede Platte (8; 27, 28) mindestens zwei abgekantete freie Ränder (13) aufweist.

15. Stütze nach einem der Ansprüche 1 bis 14, **dadurch gekennzeichnet, dass** sie im Sitz bzw. in der Liege mittels einer Bewegvorrichtung entlang einer Wegstrecke vor- und zurückbewegbar ist.

16. Stütze nach einem der Ansprüche 1 bis 15, **dadurch gekennzeichnet, dass** sie über Befestigungselemente aus Kunststoff mit dem Sitz bzw. der Liege verbunden ist.

## Claims

1. Support with an adjustable arch, especially a lumbar support, for any type of seat or bed, the frame of which contains an elastic arching element and an adjusting arrangement for setting and adjusting the arch of said arching element,
**characterised in that**
the arching element consists of an essentially flat archable surround-part (5; 5') and of at least one plate (8; 27, 28) rigidly connected to said surround-part over a small area and having two free resilient ends, and is punched in one piece from a flat elastic material and has fixing elements (7; 25; 25') to fix it to parts of the frame of the seat or bed, the fixing elements ensuring a relative movement of the fixed, opposed edges (6, 6') of the surround-part (5, 5') towards and away from each other.

2. Support according to Claim 1 **characterised in that** the archable surround-part (5, 5') has fixing elements (7; 25; 25') to fix it to the frame of the seat or bed, the fixing elements ensuring a relative movement of the fixed, opposed edges (6, 6') of the surround-part (5,5') towards and away from each other.

3. Support according to Claim 1 or 2, **characterised in that** the archable surround-part (5; 5') has retainers (17) for retaining one end of a cable core (15; 24, 24') and one end of the jacket (20; 23, 23') of a Bowden cable arrangement (14) which forms part of the adjusting arrangement for the arch of the surround-part (5; 5').

4. Support according to one of the claims 1 to 3, **characterised in that** it has two plates (27, 28) arranged symmetrically to each other and side-by-side.

5. Support according to one of the claims 1 to 4, **characterised in that** each plate (8; 27, 28) has an asymmetrical configuration.

6. Support according to one of the claims 1 to 5, **characterised in that** each plate (8; 27, 28) is connected asymmetrically to the archable surround-part (5; 5'; 5").

7. Support according to one of the claims 1 to 6, **characterised in that** the archable surround-part (5; 5') and/or each plate (8; 27, 28) has stiffening means and/or reinforcements and/or cut-away portions.

8. Support according to Claim 7, **characterised in that** ribs and/or beads and/or border flanges and/or edge folds are executed as stiffening means.

9. Support according to one of the claims 1 to 8, **characterised in that** the material is a sheet metal.

10. Support according to one of the claims 1 to 9, **characterised in that** each plate (8; 27, 28) is connected to the archable surround-part (5,5') by connecting bridges (10) of differing thickness (S) and/or length (L).

11. Support according to one of the claims 9 to 10, **characterised in that** the retainers (17) are punched out as brackets (41; 41') connected at one point to the archable surround-part (5,5').

12. Support according to one of the claims 3 to 11, **characterised in that** the cable core (15) of the adjusting arrangement is guided at least partially in guides on the archable surround-part (5').

13. Support according to one of the claims 1 to 12, **characterised in that** each plate is connected to an extension (36; 36').

14. Support according to one of the claims 1 to 13, **characterised in that** each plate (8; 27, 28) has at least two angled free edges (13).

15. Support according to one of the claims 1 to 14, **characterised in that** it can be moved forwards and backwards along a length of travel in the seat or bed by means of a moving device.

16. Support according to one of the claims 1 to 15, **characterised in that** it is connected to the seat or bed by means of fixing elements of plastics material.

## Revendications

1. Dossier à courbure adaptable, notamment élément de soutien lordotique, pour sièges et chaises longues de tout type, dont le cadre duquel est contenu un élément de courbure souple et un dispositif de réglage pour le réglage et l'ajustement de la courbure de l'élément de courbure, **caractérisé en ce que** l'élément de courbure se compose d'une partie d'élément sensiblement plate et pouvant être courbée (5, 5') et d'au moins une plaque qui y est reliée fermement sur une faible surface (8, 27, 28) avec deux extrémités libres élastiques, **en ce qu'**il est découpé d'une seule pièce dans un matériau élastique en forme de plaque et **en ce qu'**il comprend des éléments de fixation (7, 25, 25') pour sa fixation à des parties du cadre du siège ou de la chaise longue, les éléments de fixation garantissant un mouvement relatif entre eux des bords de la partie d'élément (5, 5') fixés et opposés l'un à l'autre (6, 6').

2. Dossier selon la revendication 1, **caractérisé en ce que** la partie d'élément pouvant être courbée (5, 5') comprend des éléments de fixation (7, 25, 25') pour sa fixation au cadre du siège ou de la chaise longue, les éléments de fixation garantissant un mouvement relatif entre eux des bords de la partie d'élément pouvant être courbée (5, 5') fixés et opposés l'un à l'autre (6, 6').

3. Dossier selon la revendication 1 ou 2, **caractérisé en ce que** la partie d'élément pouvant être courbée (5, 5') comprend des réceptacles (17) pour la mise en place de l'une des extrémités d'un câble de traction (15, 24, 24') et de l'une des extrémités de l'enveloppe (20, 23, 23') d'un dispositif de traction Bowden (14), qui est une partie constituante du dispositif d'ajustement pour la courbure de la partie d'élément (5, 5').

4. Dossier selon l'une des revendications 1 à 3, **caractérisé en ce qu'**il comprend deux plaques (27, 28) disposées symétriquement l'une par rapport à l'autre et côte à côte.

5. Dossier selon l'une des revendications 1 à 4, **caractérisé en ce que** chaque plaque (8, 27, 28) est réalisée de manière asymétrique.

6. Dossier selon l'une des revendications 1 à 5, **caractérisé en ce que** chaque plaque (8, 27, 28) est reliée de manière asymétrique avec la partie d'élément pouvant être courbée (5, 5', 5").

7. Dossier selon l'une des revendications 1 à 6, **caractérisé en ce que** la partie d'élément pouvant être courbée (5, 5') et/ou chaque plaque (8, 27, 28) comprend des raidisseurs et/ou des renforts et/ou des évidements.

8. Dossier selon la revendication 7, **caractérisé en ce que** des nervures et/ou des moulures et/ou des bords rabattus et/ou des pliures ou des cintrages des bords sont réalisés comme raidisseurs et/ou comme renforts.

9. Dossier selon l'une des revendications 1 à 8, **caractérisé en ce que** le matériau est de la tôle.

10. Dossier selon l'une des revendications 1 à 9, **caractérisé en ce que** chaque plaque (8, 27, 28) est reliée à la partie d'élément pouvant être courbée (5, 5') au moyen de ligaments de liaison (10) d'épaisseurs (S) et/ou de longueurs (L) différentes.

11. Dossier selon l'une des revendications 9 à 10, **caractérisé en ce que** les réceptacles (17) sont découpés comme ligaments (41, 41') reliés à un endroit avec la partie d'élément pouvant être courbée (5, 5').

12. Dossier selon l'une des revendications 3 à 11, **caractérisé en ce que**, sur la partie d'élément pouvant être courbée (5'), le câble de traction (15) du dispositif d'ajustement est placé au moins partiellement dans des guides.

13. Dossier selon l'une des revendications 1 à 12, **caractérisé en ce que** chaque plaque est reliée à un élément de prolongation (36, 36').

14. Dossier selon l'une des revendications 1 à 13, **caractérisé en ce que** chaque plaque (8, 27, 28) comprend au moins deux bords libres repliés (13).

15. Dossier selon l'une des revendications 1 à 14, **caractérisé en ce qu'**au moyen d'un dispositif de déplacement il peut être déplacé vers l'avant et vers l'arrière dans le siège ou dans la chaise longue le long d'un parcours donné.

16. Dossier selon l'une des revendications 1 à 15, **caractérisé en ce qu'**il est relié au siège ou à la chaise longue par l'intermédiaire d'éléments de fixation en matériau synthétique.
